(19) Europäisches Patentamt / European Patent Office / Office européen des brevets

(11) **EP 2 664 119 B1**

(12) **EUROPEAN PATENT SPECIFICATION**

(45) Date of publication and mention of the grant of the patent:
**15.05.2019 Bulletin 2019/20**

(21) Application number: **11822911.1**

(22) Date of filing: **07.12.2011**

(51) Int Cl.:
***H04L 29/06*** *(2006.01)*

(86) International application number:
**PCT/IN2011/000837**

(87) International publication number:
**WO 2012/095860 (19.07.2012 Gazette 2012/29)**

(54) **METHOD AND SYSTEM FOR TRUST MANAGEMENT IN DISTRIBUTED COMPUTING SYSTEMS**

VERFAHREN UND SYSTEM ZUR VERTRAUENSVERWALTUNG IN VERTEILTEN COMPUTERSYSTEMEN

PROCÉDÉ ET SYSTÈME DE GESTION DE LA CONFIANCE DANS DES SYSTÈMES D'INFORMATIQUE RÉPARTIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.01.2011 IN 120MU2011**

(43) Date of publication of application:
**20.11.2013 Bulletin 2013/47**

(73) Proprietor: **Tata Consultancy Services Limited Maharashtra (IN)**

(72) Inventor: **UKIL, Arijit West Bengal (IN)**

(74) Representative: **Potter Clarkson The Belgrave Centre Talbot Street Nottingham NG1 5GG (GB)**

(56) References cited:
**CN-A- 101 932 063**

- **MARTI S ET AL: "Mitigating routing misbehavior in mobile ad hoc networks", PROCEEDINGS OF THE SIXTH ANNUAL ACM/IEEE INTERNATIONAL CONFERENCE ON MOBILE COMPUTING AND NETWORKING : AUGUST 6 - 11, 2000, BOSTON, MASSACHUSETTS, NEW YORK, NY : ASSOC. FOR COMPUTER MACHINERY, 6 August 2000 (2000-08-06), pages 255-265, XP002556776, ISBN: 978-1-58113-197-0**

**Description**

**FIELD OF THE INVENTION**

The present invention relates trustworthiness of individual nodes in distributed computing systems. Particularly the invention determines trustworthiness of individual nodes in distributed computing systems by considering the various malicious behaviors of the individual nodes as trustworthiness parameters. More particularly the invention provides method and system that explores the behavioral pattern of the malicious nodes and quantifies those patterns to realize the secure trust management modeling.

**BACKGROUND OF THE INVENTION**

Modeling and computing trust in distributed computing systems like ad-hoc networks, particularly in Wireless Sensor Networks (WSNs) is very much challenging, where the network is formed and self-organized by relying on the almost strangers for reliable and normal operation, it is important to compute the trustworthiness of individual nodes in distributed manner.

Lot of effort shave been made to find practical and reliable trust management models. The trust management has been defined as "a unified approach to specifying and interpreting security policies, credentials, and relationships which allow direct authorization of security-critical actions". In another way trust management is defined in a broader sense as: "The activity of collecting, encoding, analyzing and presenting evidence relating to competence, honesty, security or dependability with the purpose of making assessments and decisions regarding trust relationships".

Traditionally, trust management is studied under decentralized control environment. Various security policies and security credentials have been formulated, and determined whether particular sets of credentials satisfy the relevant policies, and how deferring trust to third parties could provide better stability of the networks. There are mainly two approaches for developing trust management system; the one is policy based and the other one is reputation based. Policy based mechanisms employ different policy and engines for specifying and reasoning on rules for trust establishment. These mechanisms mostly rely on access control. Trust management based on distribution of certificates is also available, where trust is re-established by carrying out weighted analysis of the accusations received from different entities. On the other hand, reputation-based approaches have been proposed for managing trust in public key certificates, in peer to peer systems, mobile ad-hoc networks and in the semantic web. Reputation-based trust is used in distributed systems where a system only has a limited view of the information in the whole networks. It can be observed that reputation based trust management system is dynamic in nature and new trust relationship is established frequently based on the malicious activities in the network. The main issues characterizing the reputation based trust management systems are the trust metric generation and the management of reputation data.

In order to achieve the trustworthiness of individual nodes, there is a need to find answers to the inadequacy of the traditional authorization mechanisms to secure distributed systems. However, the existing method and systems are not capable of exploring the behavioral pattern of the malicious nodes and quantifies those patterns to realize the secure long term trust management modeling. Some of them known to us are as follows:
US7711117 to Rohrle et al. provides a technique for managing the migration of mobile agents to nodes of a communication network. Rohrle et al. teaches about the trustworthiness of at least one node of the network which is checked. Rohrle et al. specifically teaches about the case wherein the trustworthiness exceeds a pre-set trust threshold, a trust token for the checked node is generated and the trust token is stored in the network. The problem addressed particularly relates to a token based trust computation to felicitate the process of mobile agent migration. Further it emphasis on the migration of mobile nodes not on the realistic computation of trust values of each of the nodes in dynamic environment. It doesn't teach about the trust value computation which is based on long term observation of the trust pattern of a particular node.

US7370360 to Van der et al. provides an automated analysis system which identifies the presence of malicious P-code or N-code programs in a manner that limits the possibility of the malicious code infecting a target computer. The problem addressed particularly relates to malicious code identification. It doesn't teach about the trust value computation which is based on long term observation of the trust pattern of a particular node.

US20080084294 to Zhiying et al. provides a sensor network having node architecture for performing trust management of neighboring sensor nodes, Zhiying et al. specifically teaches about an adaptive method for performing trust management of neighboring sensor nodes for monitoring security in the sensor network. The problem addressed particularly relates to the most simplified notion trust computing in wireless sensor networks. It doesn't teach about the trust value computation which is based on long term observation of the trust pattern of a particular node.

Refaei in "Adaptation in Reputation Management Systems for Ad hoc Networks" teaches about the reputation management systems to mitigate against such misbehavior in ad hoc networks. It doesn't teach about the trust value computation which is based on long term observation of the trust pattern of a particular node.

Pirzada in "Trust based Routing in Pure Ad-hoc Wireless Network" teaches about moving from the common mechanism of achieving trust via security to enforcing dependability through collaboration. Pirzada specifically describes that all nodes in the network independently execute this trust model and maintain their own assessment concerning other nodes in the network. The problem addressed particularly relates to the human demeanor aspects on trust value computation, wherein the focus is on evaluating individual score of trust value based on reward-punishment mechanism. It doesn't teach about the trust value computation which is based on long term observation of the trust pattern of a particular node.

The above mentioned prior art s fail to disclose an efficient method and system for determining the trustworthiness of individual nodes in distributed computing systems. The prior arts discussed above also fail to provide a method and system that explores the behavioral pattern of the malicious nodes and quantifies those patterns to realize the secure trust management modeling. Unless the trend of maliciousness of a node is captured, long term trust modeling will be erroneous in a dynamic environment of many numbers of computing nodes mostly engaged in the activity of satisfying its own objective of data transmission in non cooperative manner.

Thus, in the light of the above mentioned background art, it is evident that, there is a need for a solution that can provide the trust value computation which is based on long term observation of the trust pattern of a particular node. The existing solutions generally do not determine the trustworthiness of individual nodes in distributed computing systems considering the behavioral pattern of the malicious nodes. Hence, due to the drawbacks of the conventional approaches there remains a need for a new solution that can provide an efficient method and system for determining the trustworthiness of individual nodes in distributed computing systems.

Marti S, et al., Proceedings of the sixth annual ACM/IEEE International conference on mobile computing and networking, 6 August 2000, pages 255-265 discloses mitigating routing misbehavior in mobile ad hoc networks.

## OBJECTIVES OF THE INVENTION

In accordance with the present invention, the primary objective is to determine trustworthiness of individual nodes in distributed computing systems.

Another objective of the invention is to provide a method and system for determining trustworthiness of individual nodes in distributed computing systems by considering the various malicious behaviors of the individual nodes as trustworthiness parameters.

Another objective of the invention is to provide a method and system for exploring and quantifying the behavioral pattern of the malicious nodes to realize the secure trust management modeling.

## SUMMARY OF THE INVENTION

Before the present methods, systems, and hardware enablement are described, it is to be understood that this invention in not limited to the particular systems, and methodologies described, as there can be multiple possible embodiments of the present invention which are not expressly illustrated in the present disclosure. It is also to be understood that the terminology used in the description is for the purpose of describing the particular versions or embodiments only, and is not intended to limit the scope of the present invention which will be limited only by the appended claims.

The present invention is disclosed by a method for determining trustworthiness of a node in a distributed computing system environment according to claim 1, and a system according to claim 10. Particular embodiments are defined in the dependent claims.

## BRIEF DESCRIPTION OF THE DRAWINGS

The foregoing summary, as well as the following detailed description of preferred embodiments, are better understood when read in conjunction with the appended drawings. For the purpose of illustrating the invention, there is shown in the drawings exemplary constructions of the invention; however, the invention is not limited to the specific methods and system disclosed. In the drawings:

Figure 1 shows flow diagram of the process for trust management in distributed computing systems

Figure 2 shows system architecture of the trust management in distributed computing systems

Figure 3 illustrating confidence level modeling

Figure 4 illustrating confidence level of the network based on selfish node trust model

Figure 5 illustrating confidence level of the network based on malicious accuser node trust model

Figure 6 illustrating updated trust level based on malicious accuser node trust model

## DETAILED DESCRIPTION OF THE INVENTION

Some embodiments of this invention, illustrating all its features, will now be discussed in detail.

The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present invention, the preferred, systems and methods are now described.

The disclosed embodiments are merely exemplary of the invention, which may be embodied in various forms.

The present invention enables a method and system for determining trustworthiness of individual nodes in distributed computing systems. Particularly, the invention enables a method and system for determining trustworthiness of individual nodes in distributed computing systems by considering the various malicious behaviors of the individual nodes as trustworthiness parameters. More particularly, the invention enables a method and system for exploring and quantifying the behavioral pattern of the malicious nodes to realize the secure trust management modeling.

The present invention provides a method for determining trustworthiness of individual nodes in distributed computing systems, the said method is characterized by considering the malicious behavior of the individual nodes as a trustworthiness parameter, wherein the said trustworthiness of individual nodes is determined by the computer implemented steps of:

    a. forwarding at least one data packet by first node to its neighboring second node;
    b. monitoring the next-hop delivery of forwarded data packet by second node to third node by the first node;
    c. computing the forwarding index of the second node using the monitored next-hop delivery by the first node;
    d. finding the individual confidence level of second node using forwarding index of the second node over the average time period by the first node;
    e. observing the forwarding trend of the second node and updating the individual confidence level of second node by the first node for determining long-term trustworthiness of individual nodes in distributed computing systems.

The present invention provides a system for determining trustworthiness of individual nodes in distributed computing systems, the said system characterized by considering the malicious behaviors of the individual nodes as a trustworthiness parameter, wherein the said trustworthiness of individual nodes is determined by:

    a. means for forwarding at least one data packet by first node to its neighboring second node;
    b. means for monitoring the next-hop delivery of forwarded data packet by second node to third node by the first node;
    c. means for computing the forwarding index of the second node using the monitored next-hop delivery by the first node;
    d. means for finding the individual confidence level of second node using forwarding index of the second node over the average time period by the first node;
    e. means for observing the forwarding trend of the second node and updating the individual confidence level of second node by the first node for determining long-term trustworthiness of individual nodes in distributed computing systems.

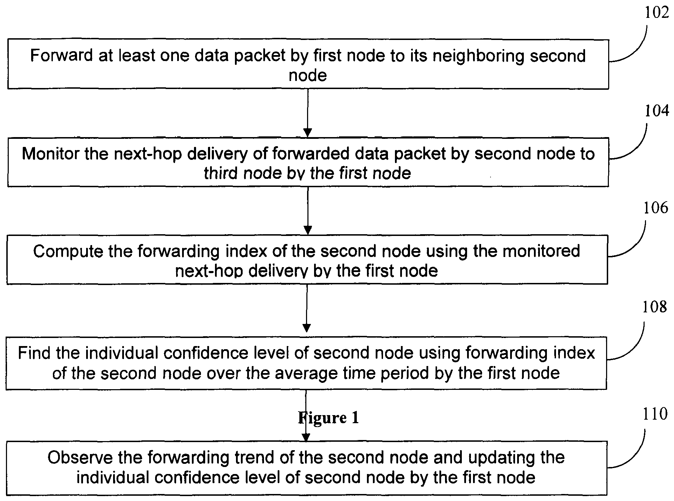

Referring to Figure 1 is a flow diagram of the process for trust management in distributed computing systems

The process starts at the step 102, at least one data packet is forwarded by first node to its neighboring second node. At the step 104, the next-hop delivery of forwarded data packet by second node to third node is monitored by the first node. At the step 106, the forwarding index of the second node is computed using the monitored next-hop delivery by the first node. At the step 108, the individual confidence level of second node is found using forwarding index of the second node over the average time period by the first node. The process ends at the step 110, the forwarding trend of the second node is observed and the individual confidence level of second node is updated by the first node for determining trustworthiness of individual nodes in distributed computing systems.

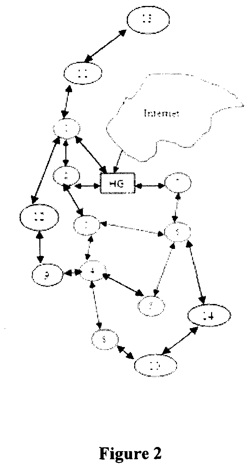

Referring to Figure 2 is system architecture of the trust management in distributed computing systems.

In one embodiment of the invention, according to the system architecture, N number of nodes is considered in a distributed computing system. These N nodes through single hop or multi-hop can communicate with the central server, which is shown as Home Gateway (HG). For the sake of clarity, number of nodes N has been considered as N = 14. The nodes have bi-directional (mostly wireless) connections by which they may reach other nodes through the server or directly through other nodes. There are two types of malicious behaviors of the nodes which were considered:

1. Selfish node: A node that does not forward the packets meant for other nodes.

2. Accuser node: A node that falsely accuses another node as selfish with the intention of isolating that node from the network.

In order to find an appropriate model, there is a need to develop the concept of confidence level. Nodes with their previous activities and behavior patterns are distinguished as reliable nodes and unreliable nodes. Reliable nodes are nodes with high confidence level and unreliable nodes are nodes with low confidence level, i.e., to say that nodes crossed the threshold confidence level are reliable, which have confidence level value less than that are unreliable.

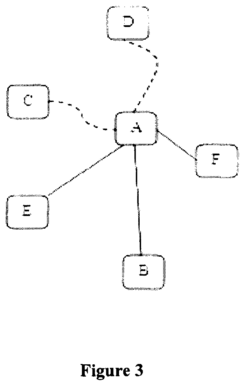

Referring to Figure 3 is illustrating confidence level modeling.

In another embodiment of the invention, each node has the confidence level values of its immediate neighbors in a distributed computing system. So, it may turn out be an unreliable node for one node might be reliable for another node. Every node maintains confidence level matrix of its immediate neighbors, which are later required for trust management.

According to the Figure 3, node A has 5 neighbor nodes; B, C, D, E and F. For node A, node B E, and F are reliable and node C and D are non reliable. Like node A, same kind of confidence level matrix is dynamically computed and stored for each of the nodes. In the Figure 3 dotted line denotes non reliability between nodes which is the case in between node A-C and node A-D. The solid lines represent reliability between nodes which is the case in between node A-B, node A-E and node A-F.

In another embodiment of the invention, trust management is responsible for collecting the necessary information to establish a trust relationship by computing through some pre-defined algorithm and for dynamically monitoring and updating the existing trust relationship. Selfish nodes have been characterized as the nodes which is reluctant of forwarding other nodes packets.

Every node monitors the next-hop delivery of its packet. In the system architecture according to the Figure 2, let's consider node 3 likes to send its packet to HG. The route is:

Node 3 $\rightarrow$ Node 6 $\rightarrow$ Node 7 $\rightarrow$ HG

Now after forwarding the packet to node 6, node 3 monitors whether node 6 forwards the packet to node 7 or drops. Like this every node monitor the fate of its packet if it needs to send through some forwarding nodes. Based on the behavior of the forwarding nodes, the originating node computes the trustworthiness of its neighbor. Two types of parameters computation have been proposed. One is instantaneous and the other is average over a time window.

The parameters considered at t=T are:

1. $\Delta_{rij}$ = Number of packets requested to forward by node i to node j, where $\in M, i \neq j$, M = neighbors of i.

2. $\Delta_{fii}$ = Number of packets forwarded by node i requested by another node j, where $\in M, i \neq j$, M = neighbors of j.

$$\Delta F_{ij} = \frac{\Delta_{fij}}{\Delta_{rij}} = \text{Forwarding index of node j for node i,}$$

3.   where $\in M, i \neq j$, M = neighbors of i.

This instantaneous forwarding index computation is required to find the individual confidence level of other neighboring nodes over the averaging time period Tav. Other than that, another important factor for computing $\Delta F_{ij}$ is to observe the trend of its neighboring nodes. If it is found that its packets are not forwarded by some neighboring nodes, the originating node pro-actively forward its packet to another node isolating the nodes those not forwarding its packets, even in the case that new path is longer.

The confidence level is denoted as:

$C_{ij}$ = confidence level of node j as computed by node i, where $\in M, i = j$, M = neighbors of i.

$$C_{ij} = \frac{\sum_{Tav} \Delta_{rij}}{\sum_{Tav} \Delta_{fij}}$$

After computing $C_{ij}$, node i broadcasts its own computed confidence level value of node j. Likewise node i receives the confidence level of node j by all of the nodes (few of the nodes in case of large scale distributed systems, like dense WSNs). So, node i and other compute confidence level for node j, which is $C_j$.

$$C_j = \frac{1}{N-1} \sum_{i=j} C_{ij}$$

Where N = number of considered nodes.

This way every node dynamically updates the confidence level of all its neighbors, which is stored as a scalar matrix. For node i it is denoted as:

$$[C_1^i \; C_2^i \; ... \; C_K^i]$$

where 1, 2, ..., K are the neighboring nodes of node i. This matrix is updated periodically with Tav as the time period.

Let $C_T$ = confidence threshold

Now, after computing the confidence level of its neighbor all the nodes compute the trust of its neighbor, which is:

$$[C_1^i - C_T \; C_2^i - C_T \; ... \; C_K^i - C_T] = [T_1^i \; T_2^i \; ... \; T_K^i]$$

Where $T_k^i$ denotes the trust level of node k as per node k.

It is to be observed that all the entries in the confidence matrix has values $0 \leq x \leq 1$. The value of $C_T$ is close to 0. This is taken as .85. So, some of the trust values may be negative (in the confidence level of a node is less than the threshold).

In another embodiment of the invention, considering the other scenario in Figure 2, where node 4 wants to send the packet to Home Gateway (HG). Node 3, 5, 8 and 9 are its neighbors. Node 4 can forward its packet through any of these. But, it is best to send the packet through node 3 for reaching to Home Gateway (HG) and the worst is through node 8. So, node 4 likes it to forward through node 3. Before forwarding the packet it checks the credential of its neighbor nodes with the help of confidence matrix. If it finds that node 3's trust value is positive, node 1 forwards the packet to node 3. Else it will check the trust value of the next best node as per routing performance. Node 4 stops until both the condition satisfies. In this case, trust value of a neighbor acts like a gatekeeper, which permits only after its credential is allowable. But the preference is always on the routing performance.

The above stated algorithm enforces reliability of data transfer by selecting the trusted node, even if it is required to send the data through the path which is not the shortest one. The algorithm enhances reliability to a larger extent with some extra communication cost by sending data through a non-shortest route. This is very much required for reliable transmission and to adapt to noncooperation in a distributed computing environment like Wireless sensor Networks (WSNs).

The proposed model detects the false accuser nodes which try to destabilize the network performance by falsely accusing a reliable node as the one which is not forwarding packets.

In another embodiment of the invention, the malicious act of a particular node needs to taken into account in the trust computation in order to defend one node when accused by another node. Let's again consider the case of node 4. It finds trust value of node 3 as positive, so it forwards it packets to node 3. Now, node 3 reliably forwards the packet to node 2. After that, node 3 keeps track on the updated trust value broadcast by node 4. Node 3 updates its accuser value for each of its forwarding. This is: $[A_4^3 \; A_2^3 \; A_6^3]$.

$$A_j^i = \begin{cases} 0 \; ; if \; j \; falsely \; accuses \; i \\ 1 \; ; if \; j \; rewards \; i \; for \; forwarding \end{cases}$$

Accordingly, node 3 updates its confidence value for node 4 as:

$$C_{ij} = \frac{\sum_{Tav} \Delta_{rij} \cdot A_i^j}{\sum_{Tav} \Delta_{fij}}$$

Where i = 3, j = 4.

In other words, if the malicious activity of a node is detected as accuser, its trust level by the detector becomes 0. This affects the overall computation of the nodes trust value:

$$c_j = \frac{1}{N-1} \sum_{i \neq j} c_{ij}$$

If j =4, due to its malicious accuser activity $C_{34} = 0$.

Thus, any sort of malicious behavior of a node falsely accusing another node gets punished eventually.

The scenario depicted in Figure 3 is considered, where node A is required to send data packet to Home Gateway (HG) and it needs to find the reliable path through which it will send data packet. Firstly, trust modeling against selfish nodes is estimated. Let's consider the case for node 4. Node 4 wants to send packet. Before sending it evaluates the trust matrix. In Table 1, it is depicted numerically. It may be noted that forwarding index at t +T is local, where as forwarding index over Tav is global and it is broadcast to others for confidence level computation. Node 4 has four neighbor nodes 3, 9, 5 and 8. The table depicts the confidence level computed at node 4 for its neighbors.

**TABLE 1**

| Sensor node | Forwarding index at t= T | Forwarding index over Tav | Confidence level |
|---|---|---|---|
| 3 | .7 | .89 | .76 |
| 9 | .3 | .52 | .83 |
| 5 | .3 | .76 | .94 |
| 8 | .9 | .95 | .86 |

From this value the trust values of the neighbors of node 4 (considering $C_T$ = 0.8) is computed.

**TABLE 2**

| Sensor node | Trust value |
|---|---|
| $T_3^4$ | -0.04 |
| $T_9^4$ | +0.03 |
| $T_5^4$ | +0.14 |
| $T_8^4$ | +0.06 |

From routing table information, it is found that for node 4, the best node to forward is node 3, and then to node 9, then node 5 and worst is node 8. Node 4 checks the trust value of node 3. It turns out to be negative (-0.04). So, node 4 checks for node 9, which has positive trust value. So, node 4 chooses node 9 to forward the data packet.

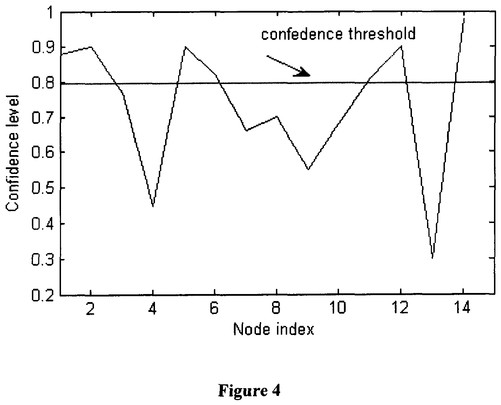

In this example, a particular case is shown, where for the overall network, at t= T, the confidence level of each of the nodes are shown in Figure 4. Now consider the case for malicious accuser. In this case, some of the nodes are detected as malicious accuser. So, considering that the overall confidence level goes down which is shown in Figure 4.

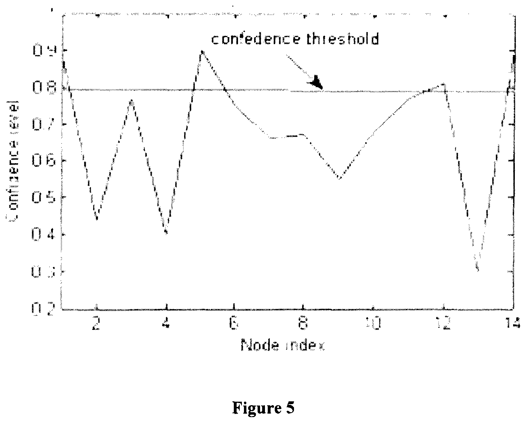

Referring to Figure 5 is illustrating confidence level of the network based on malicious accuser node trust model. It is seen that for some nodes the confidence level goes down very drastically. For few, there is no change. It can be observed that for some of the nodes, like node no. 2, 6, 12 and 14, confidence level goes down. Most drastic is for node 2. After considering the both of proposed algorithms together, node 2 becomes unreliable. This consideration affects the trust value. Now the trust values also change. So, it is found that Table 2 also gets updated and changed. Updated Table 2 is Table 3.

TABLE 3

| Sensor node | Trust value |
|---|---|
| $T_3^4$ | -0.04 |

(continued)

| Sensor node | Trust value |
|---|---|
| $T_9^4$ | -0.09 |
| $T_5^4$ | +0.1 |
| $T_3^4$ | +0 06 |

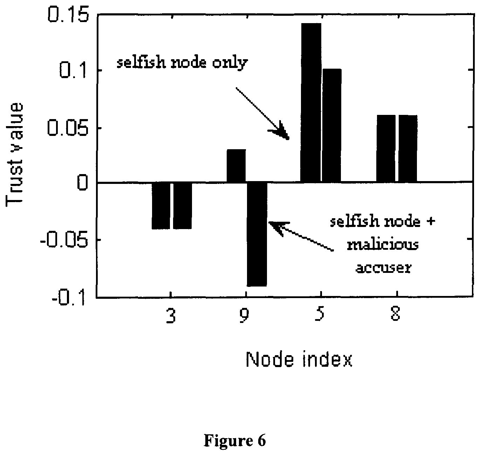

Referring to Figure 6 is illustrating updated trust level based on malicious accuser node trust model.

It is noticed that with updated list, node 9's trust value becomes negative. So, node 4 has to choose node 5 for forwarding its packet instead of node 9 chosen previously. In fact, this is the best path to reliably forward node 4's packet. It is seen that when only considering selfish nodes, node 9 is the best path for node 4 to forward its packets. But, when the malicious accuser behavior of is taken into account, node 9's trust value becomes negative. This indicates it is unreliable. So, node 4 needs to forward the packet through node 5 though it needs to compromise on communication cost in order to gain more reliability for its packet delivery.

The preceding description has been presented with reference to various embodiments of the invention.

## ADVANTAGES OF THE INVENTION

1. The present invention provides the practical evaluation of trust values of the individual nodes in distributed computing systems.
2. The present invention provides more reliable detection of selfish and accuser nodes.
3. The present invention provides long term evaluation of trust value, which eliminates the transient characteristics of short term trust value computation.
4. The present invention distinguishes malicious node, defective node and accuser node.

## Claims

1.  A method for determining trustworthiness of a node in a distributed computing system environment, the method comprising the computer implemented steps of:

    forwarding, data packets from a first node to a second node;
    monitoring, a next-hop delivery of the data packets from the second node to a third node, wherein the monitoring is performed by the first node;
    computing, a forwarding index of the second node based on the monitoring, wherein the forwarding index is computed by the first node based upon a number of the data packets requested to be forwarded from the second node to the third node and a number of the data packets actually forwarded by the second node to the third node;
    determining, an individual confidence level of the second node, wherein the individual confidence level is computed by the first node by dividing a summation of number of the data packets requested to be forwarded over an average time period and a summation of the number of data packets actually forwarded over the average time period by the second node;
    checking, a forwarding trend of the second node to the third node based on the forwarding index and the individual confidence level of the second node received from the neighbouring nodes;
    computing, an updated individual confidence level of the second node by the first node based on an accuser value of the second node, wherein the accuser value is determined based on the confidence level of the first node broadcast by the second node;
    updating, the individual confidence level of the second node by the first node based on the forwarding trend and the updated individual confidence level of the second node received from the neighbouring nodes;
    determining, a trust value of the node based on a threshold confidence level and the updated individual confidence level by the first node, wherein the trust value is indicative of the long-term trustworthiness of the individual nodes in the distributed computing system; and
    identifying, a reliable route for forwarding the data packets from the first node to a target node based on the determined trust value.

2. The method as claimed in claim 1, further comprising forwarding the at least one data packet to a node other than the second node.

3. The method as claimed in claim 1, further comprising:
broadcasting the individual confidence level of the second node to one or more neighbouring nodes by the first node.

4. The method as claimed in claim 1, further comprising:
receiving a broadcast of another confidence level of the second node from one or more neighbouring nodes by the first node.

5. The method as claimed in claim 4, further comprising:
updating dynamically the individual confidence level of the second node after receiving the broadcast of the another confidence level of the second node from the one or more neighbouring nodes of the first node.

6. The method as claimed in claim 5, wherein the first node computes and stores the dynamically updated confidence level of the second node in a scalar matrix.

7. The method as claimed in claim 6, wherein the scalar matrix of the first node comprises the individual confidence level of the second node as a number greater than or equal to zero and less than or equal to one.

8. The method as claimed in claim 1, further comprising:
classifying the individual nodes in the distributed computing system into malicious nodes, defective nodes, and accuser nodes.

9. The method as claimed in claim 1, wherein the distributed computing system is a wireless sensor network.

10. A system for determining trustworthiness of a node in a distributed computing system, the system comprising means for:

a processor; and
a memory disposed in communication with the processor and storing processor-executable instructions, the instructions comprising instructions for:

forwarding data packets from a first node to a second node;
monitoring a next-hop delivery of the data packets from the second node to a third node, wherein the monitoring is performed by the first node;
computing a forwarding index of the second node based on the monitoring, wherein the forwarding index is computed by the first node based on a number of the data packets requested to be forwarded from the second node to the third node and a number of the data packets actually forwarded by the second node to the third node;
determining an individual confidence level of the second node, wherein the individual confidence level is computed by the first node by dividing a summation of number of the data packets requested to be forwarded over an average time period and a summation of the number of the data packets actually forwarded over the average time period by the second node;
checking a forwarding trend of the second node to the third node based on the forwarding index and the individual confidence level of the second node received from the neighbouring nodes;
computing an updated individual confidence level of the second node by the first node based on an accuser value of the second node, wherein the accuser value is determined based on the confidence level of the first node broadcast by the second node;
updating the individual confidence level of the second node by the first node based on the forwarding trend and the updated individual confidence level of the second node received from the neighbouring nodes;
determining a trust value of the node based on a threshold confidence level and the updated individual confidence level by the first node, wherein the trust value is indicative of the long-term trustworthiness of the individual nodes in the distributed computing system; and
identifying a reliable route for forwarding the data packets from the first node to a target node based on the determined trust value.

11. The system as claimed in claim 10, wherein updating dynamically the individual confidence level of the second node after receiving the broadcast of the confidence level of the second node from the one or more neighbouring nodes of the first node.

12. The system as claimed in claim 11, wherein the first node computes and stores the dynamically updated confidence level of the second node in a scalar matrix.

13. The system as claimed in claim 12, wherein the scalar matrix of the first node comprises the individual confidence level of the second node as a number greater than or equal to zero and less than or equal to one.

14. The system as claimed in claim 10, wherein classifying the individual node in the distributed computing system into at least two categories selected from a group consisting of: malicious nodes, defective nodes, and accuser nodes.

15. The system as claimed in claim 10, wherein the distributed computing system is a wireless sensor network.


**Patentansprüche**

1. Verfahren zum Bestimmen der Vertrauenswürdigkeit eines Knotens in einer verteilten Computersystemumgebung, wobei das Verfahren die folgenden, Computer-implementierten Schritte umfasst:

   Weiterleiten von Datenpaketen von einem ersten Knoten zu einem zweiten Knoten;
   Überwachen einer Nächster Hop-Zustellung der Datenpakete vom zweiten Knoten an einen dritten Knoten, wobei das Überwachen durch den ersten Knoten durchgeführt wird;
   Berechnen eines Weiterleitungsindex des zweiten Knotens basierend auf dem Überwachen, wobei der Weiterleitungsindex von dem ersten Knoten basierend auf einer Anzahl von Datenpaketen berechnet wird, die zur Weiterleitung vom zweiten Knoten an den dritten Knoten angefordert werden, und einer Anzahl von Datenpaketen, die tatsächlich vom zweiten Knoten an den dritten Knoten weitergeleitet wurden;
   Bestimmen eines individuellen Vertrauensniveaus des zweiten Knotens, wobei das individuelle Vertrauensniveau durch den ersten Knoten berechnet wird, indem eine Summe der Anzahl von Datenpaketen, die zum Weiterleiten angefordert werden, über eine durchschnittliche Zeitdauer und eine Summe der Anzahl von Datenpaketen, die tatsächlich über den durchschnittlichen Zeitraum durch den zweiten Knoten weitergeleitet wurden, geteilt wird;
   Prüfen eines Weiterleitungstrends des zweiten Knotens an den dritten Knoten basierend auf dem Weiterleitungsindex und dem individuellen Vertrauensniveau des zweiten Knotens, das von den benachbarten Knoten empfangen wird;
   Berechnen eines aktualisierten individuellen Vertrauensniveaus des zweiten Knotens durch den ersten Knoten basierend auf einem Hinweiswert des zweiten Knotens, wobei der Hinweiswert basierend auf dem Vertrauensniveau des ersten Knotens bestimmt wird, das von dem zweiten Knoten rundgesendet wird;
   Aktualisieren des individuellen Vertrauensniveaus des zweiten Knotens durch den ersten Knoten basierend auf dem Weiterleitungstrend und dem aktualisierten individuellen Vertrauensniveau des zweiten Knotens, das von den benachbarten Knoten empfangen wird;
   Bestimmen eines Vertrauenswerts des Knotens basierend auf einem Schwellenwert-Vertrauensniveau und dem aktualisierten individuellen Vertrauensniveau durch den ersten Knoten, wobei der Vertrauenswert die langfristige Vertrauenswürdigkeit der einzelnen Knoten in dem verteilten Computersystem anzeigt; und
   Identifizieren einer zuverlässigen Route zum Weiterleiten der Datenpakete von dem ersten Knoten an einen Zielknoten basierend auf dem bestimmten Vertrauenswert.

2. Verfahren nach Anspruch 1, ferner umfassend das Weiterleiten des mindestens einen Datenpakets an einen anderen Knoten als den zweiten Knoten.

3. Verfahren nach Anspruch 1, ferner umfassend:
   Rundsenden des individuellen Vertrauensniveaus des zweiten Knotens an einen oder mehrere benachbarte Knoten durch den ersten Knoten.

4. Verfahren nach Anspruch 1, ferner umfassend:
   Empfangen eines Broadcasts eines anderen Konfidenzniveaus des zweiten Knotens von einem oder mehreren benachbarten Knoten durch den ersten Knoten.

**5.** Verfahren nach Anspruch 4, ferner umfassend:
dynamisches Aktualisieren des individuellen Vertrauensniveaus des zweiten Knotens nach dem Empfangen des Broadcasts des anderen Vertrauensniveaus des zweiten Knotens von einem oder mehreren benachbarten Knoten des ersten Knotens.

**6.** Verfahren nach Anspruch 5, wobei der erste Knoten das dynamisch aktualisierte Vertrauensniveau des zweiten Knotens in einer Skalarmatrix berechnet und speichert.

**7.** Verfahren nach Anspruch 6, wobei die Skalarmatrix des ersten Knotens das individuelle Vertrauensniveau des zweiten Knotens als eine Zahl umfasst, die größer als oder gleich Null ist und kleiner oder gleich Eins ist.

**8.** Verfahren nach Anspruch 1, ferner umfassend:
Klassifizieren der einzelnen Knoten im verteilten Computersystem in schädliche Knoten, defekte Knoten und Hinweisknoten.

**9.** Verfahren nach Anspruch 1, wobei das verteilte Computersystem ein drahtloses Sensornetzwerk ist.

**10.** System zum Bestimmen der Vertrauenswürdigkeit eines Knotens in einem verteilten Computersystem, wobei das System die folgenden Mittel umfasst für:

einen Prozessor; und
einen Speicher, der in Kommunikation mit dem Prozessor angeordnet ist und vom Prozessor ausführbare Anweisungen speichert, wobei die Anweisungen Anweisungen umfassen zum:

Weiterleiten von Datenpaketen von einem ersten Knoten zu einem zweiten Knoten;
Überwachen einer Nächster Hop-Zustellung der Datenpakete von dem zweiten Knoten zu einem dritten Knoten, wobei die Überwachung von dem ersten Knoten durchgeführt wird;
Berechnen eines Weiterleitungsindex des zweiten Knotens basierend auf dem Überwachen, wobei der Weiterleitungsindex von dem ersten Knoten basierend auf einer Anzahl von Datenpaketen, die zur Weiterleitung vom zweiten Knoten an den dritten Knoten angefordert werden, und einer Anzahl von Datenpaketen, die tatsächlich vom zweiten Knoten an den dritten Knoten weitergeleitet wurden, berechnet wird;
Bestimmen eines individuellen Vertrauensniveaus des zweiten Knotens, wobei das individuelle Vertrauensniveau durch den ersten Knoten berechnet wird, indem eine Summe der Anzahl der Datenpakete, die zum Weiterleiten angefordert werden, über eine durchschnittliche Zeitdauer und eine Summe der Anzahl der Datenpakete geteilt wird, die tatsächlich über den durchschnittlichen Zeitraum durch den zweiten Knoten weitergeleitet wurden;
Prüfen eines Weiterleitungstrends des zweiten Knotens zu dem dritten Knoten basierend auf dem Weiterleitungsindex und dem individuellen Vertrauensniveau des zweiten Knotens, das von den benachbarten Knoten empfangen wird;
Berechnen eines aktualisierten individuellen Vertrauensniveaus des zweiten Knotens durch den ersten Knoten basierend auf einem Hinweiswert des zweiten Knotens, wobei der Hinweiswert basierend auf dem Vertrauensniveau des ersten Knotens bestimmt wird, das vom zweiten Knoten rundgesendet wird;
Aktualisieren des individuellen Vertrauensniveaus des zweiten Knotens durch den ersten Knoten basierend auf dem Weiterleitungstrend und dem aktualisierten individuellen Vertrauensniveau des zweiten Knotens, das von den benachbarten Knoten empfangen wird;
Bestimmen eines Vertrauenswerts des Knotens basierend auf einem Schwellenwert-Vertrauensniveau und dem aktualisierten individuellen Vertrauensniveau durch den ersten Knoten, wobei der Vertrauenswert die langfristige Vertrauenswürdigkeit der einzelnen Knoten in dem verteilten Computersystem anzeigt; und
Identifizieren einer zuverlässigen Route zum Weiterleiten der Datenpakete von dem ersten Knoten an einen Zielknoten basierend auf dem ermittelten Vertrauenswert.

**11.** System nach Anspruch 10, wobei das individuelle Vertrauensniveau des zweiten Knotens nach dem Empfangen des Broadcasts des Vertrauensniveaus des zweiten Knotens von dem einen oder den mehreren benachbarten Knoten des ersten Knotens dynamisch aktualisiert wird.

**12.** System nach Anspruch 11, wobei der erste Knoten das dynamisch aktualisierte Vertrauensniveau des zweiten Knotens in einer Skalarmatrix berechnet und speichert.

**13.** System nach Anspruch 12, wobei die Skalarmatrix des ersten Knotens das individuelle Vertrauensniveau des zweiten Knotens als eine Zahl größer als oder gleich Null und kleiner als oder gleich Eins umfasst.

**14.** System nach Anspruch 10, wobei der einzelne Knoten in dem verteilten Computersystem in mindestens zwei Kategorien klassifiziert wird, die aus einer Gruppe ausgewählt werden, die aus Folgendem besteht: schädliche Knoten, defekte Knoten und Hinweisknoten.

**15.** System nach Anspruch 10, wobei das verteilte Computersystem ein drahtloses Sensornetzwerk ist.

**Revendications**

**1.** Procédé de détermination de la fiabilité d'un noeud dans un environnement de système informatique distribué, ledit procédé comprenant les étapes mises en oeuvre par ordinateur consistant à :

transmettre des paquets de données d'un premier noeud à un deuxième noeud ;
surveiller la prochaine transmission des paquets de données du deuxième noeud à un troisième noeud, la surveillance étant assurée par le premier noeud ;
calculer l'indice de transmission du deuxième noeud sur la base de la surveillance, l'indice de transmission étant calculé par le premier noeud sur la base d'un certain nombre de paquets de données à transmettre du deuxième noeud au troisième noeud, et d'un certain nombre de paquets de données réellement transmis au troisième noeud par le deuxième noeud ;
déterminer le niveau de confiance individuel du deuxième noeud, le niveau de confiance individuel étant calculé par le premier noeud en divisant la somme d'un certain nombre de paquets de données à transmettre au cours d'une période moyenne de temps, et en divisant la somme du nombre de paquets de données réellement transmis par le deuxième noeud au cours d'une période moyenne de temps ;
contrôler la tendance de transmission du deuxième noeud au troisième noeud sur la base de l'indice de transmission et du niveau de confiance individuel du deuxième noeud reçu des noeuds voisins ;
calculer, grâce au premier noeud, un nouveau niveau de confiance individuel du deuxième noeud sur la base d'une valeur accusatrice du deuxième noeud, la valeur accusatrice étant déterminée sur la base du niveau de confiance du premier noeud transmis par le deuxième noeud ;
mettre à jour le niveau de confiance individuel du deuxième noeud grâce au premier noeud sur la base de la tendance de transmission et du nouveau niveau de confiance individuel du deuxième noeud reçu des noeuds voisins ;
déterminer la valeur de confiance du noeud sur la base d'un niveau de confiance seuil et du niveau de confiance individuel mis à jour par le premier noeud, la valeur de confiance étant une indication de la fiabilité à long terme des noeuds individuels dans le système informatique distribué ; et
identifier un chemin fiable pour la transmission des paquets de données du premier noeud à un noeud cible sur la base d'une valeur de confiance déterminée.

**2.** Procédé selon la revendication 1, comprenant en outre la transmission de l'au moins un paquet de données vers un noeud différent du deuxième noeud.

**3.** Procédé selon la revendication 1, comprenant en outre :
la transmission, par le premier noeud, du niveau de confiance individuel du deuxième noeud vers un ou plusieurs noeuds voisins.

**4.** Procédé selon la revendication 1, comprenant en outre :
la réception d'une transmission, par le premier noeud, d'un autre niveau de confiance du deuxième noeud provenant d'un ou de plusieurs noeuds voisins.

**5.** Procédé selon la revendication 4, comprenant en outre :
la mise à jour dynamique du niveau de confiance individuel du deuxième noeud après réception de la transmission de l'autre niveau de confiance du deuxième noeud provenant d'un ou de plusieurs noeuds voisins du premier noeud.

**6.** Procédé selon la revendication 5, **caractérisé en ce que** le premier noeud calcule et enregistre le niveau de confiance individuel du deuxième noeud, mis à jour de façon dynamique dans une matrice scalaire.

**7.** Procédé selon la revendication 6, **caractérisé en ce que** la matrice scalaire du premier noeud comprend le niveau de confiance individuel du deuxième noeud en tant que nombre supérieur ou égal à zéro et inférieur ou égal à un.

**8.** Procédé selon la revendication 1, comprenant en outre :
la classification des noeuds individuels en noeuds malveillants, noeuds défectueux et noeuds accusateurs dans le système informatique distribué.

**9.** Procédé selon la revendication 1, **caractérisé en ce que** le système informatique distribué est un réseau de capteurs sans fil.

**10.** Système de détermination de la fiabilité d'un noeud dans un système informatique distribué, ledit système comprenant des dispositifs pour :

un processeur ; et
une mémoire mise en communication avec le processeur, et mémorisant les instructions exécutables par le processeur, lesdites instructions comprenant des instructions concernant :

la transmission de paquets de données d'un premier noeud à un deuxième noeud ;
la surveillance de la prochaine transmission des paquets de données du deuxième noeud à un troisième noeud, la surveillance étant assurée par le premier noeud ;
le calcul de l'indice de transmission du deuxième noeud sur la base de la surveillance, l'indice de transmission étant calculé par le premier noeud sur la base d'un certain nombre de paquets de données à transmettre du deuxième noeud au troisième noeud, et d'un certain nombre de paquets de données réellement transmis au troisième noeud par le deuxième noeud ;
la détermination du niveau de confiance individuel du deuxième noeud, le niveau de confiance individuel étant calculé par le premier noeud en divisant la somme d'un certain nombre de paquets de données à transmettre au cours d'une période moyenne de temps, et en divisant la somme d'un certain nombre de paquets de données réellement transmis par le deuxième noeud au cours d'une période moyenne de temps ;
le contrôle de la tendance de transmission du deuxième noeud au troisième noeud sur la base de l'indice de transmission et du niveau de confiance individuel du deuxième noeud reçu des noeuds voisins ;
le calcul d'un nouveau niveau de confiance individuel du deuxième noeud par le premier noeud sur la base d'une valeur accusatrice du deuxième noeud, la valeur accusatrice étant déterminée sur la base du niveau de confiance du premier noeud transmis par le deuxième noeud ;
la mise à jour du niveau de confiance individuel du deuxième noeud par le premier noeud sur la base de la tendance de transmission et du nouveau niveau de confiance individuel du deuxième noeud reçu des noeuds voisins ;
la détermination de la valeur de confiance du noeud sur la base d'un niveau de confiance seuil et du niveau de confiance individuel mis à jour par le premier noeud, la valeur de confiance étant une indication de la fiabilité à long terme des noeuds individuels dans le système informatique distribué ; et
l'identification d'un chemin fiable pour la transmission des paquets de données du premier noeud à un noeud cible sur la base d'une valeur de confiance déterminée.

**11.** Système selon la revendication 10, **caractérisé par** la mise à jour dynamique du niveau de confiance individuel du deuxième noeud après réception de la transmission du niveau de confiance du deuxième noeud provenant d'un ou de plusieurs noeuds voisins du premier noeud.

**12.** Système selon la revendication 11, **caractérisé en ce que** le premier noeud calcule et enregistre le niveau de confiance du deuxième noeud, mis à jour de façon dynamique dans une matrice scalaire.

**13.** Système selon la revendication 12, **caractérisé en ce que** la matrice scalaire du premier noeud comprend le niveau de confiance individuel du deuxième noeud en tant que nombre supérieur ou égal à zéro et inférieur ou égal à un.

**14.** Système selon la revendication 10, **caractérisé par** la classification du noeud individuel dans le système informatique distribué en deux catégories au moins, choisies dans un groupe constitué par :
des noeuds malveillants, des noeuds défectueux et des noeuds accusateurs.

**15.** Système selon la revendication 10, **caractérisé en ce que** le système informatique distribué est un réseau de capteurs sans fil.

102

Forward at least one data packet by first node to its neighboring second node

104

Monitor the next-hop delivery of forwarded data packet by second node to third node by the first node

106

Compute the forwarding index of the second node using the monitored next-hop delivery by the first node

108

Find the individual confidence level of second node using forwarding index of the second node over the average time period by the first node

**Figure 1**

110

Observe the forwarding trend of the second node and updating the individual confidence level of second node by the first node

**Figure 2**

**Figure 3**

**Figure 4**

**Figure 5**

**Figure 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7711117 B, Rohrle
- US 7370360 B, Van der
- US 20080084294 A, Zhiying

**Non-patent literature cited in the description**

- **MARTI S et al.** *Proceedings of the sixth annual ACM/IEEE International conference on mobile computing and networking,* 06 August 2000, 255-265